# EUROPÄISCHE PATENTANMELDUNG

(11) **EP 1 457 465 A1**
(43) Veröffentlichungstag der Anmeldung: **15.09.2004**
(21) Anmeldenummer: 03005205.4
(22) Anmeldetag: 08.03.2003
(51) Int. Cl.: C03B 27/02, C03B 27/04

(54) **Verfahren und Vorrichtung zum Abschrecken von Glastafeln**

(71) Anmelder: Tecnopat AG, 9008 St. Gallen (CH)
(72) Erfinder: Lisec, Peter, 3363 Amstetten-Hausmening (AT)
(74) Vertreter: Beer, Manfred, Dipl.-Ing.

(57) **Zusammenfassung**

Zum Abschrecken von Glastafeln (8) mit einem kühlenden Luftstrom wird der Luftstrom aus mehreren Düsen (14) von beiden Seiten her auf die abzuschreckende Glastafel (8) gerichtet. Diese Düsen (14) sind rings um Mündungen (16) von Rohrstücken (32) angeordnet, durch welche der auf das Glas (8) gerichtete Luftstrom von der Glastafel (8) wieder weg geleitet wird. Die Kühlwirkung beim Abschrecken von Glastafeln (8) kann erhöht werden, indem der auf die Glastafeln (8) gerichteten Luft Wasser in Form feinster Tröpfchen zugemischt wird.

## Beschreibung

Die Erfindung betrifft ein Verfahren und eine Vorrichtung zum Abschrecken von Glastafeln, um diese zu härten.

Beim Härten von Glastafeln werden diese zunächst auf eine Temperatur über der Härtetemperatur aufgeheizt (in der Regel etwa 600-700°C) und dann möglichst rasch abgekühlt, um einen Härtevorgang zu bewirken. Durch das Abschrecken der Glastafeln entsteht eine beabsichtigte zentrale Zugspannung in den Glastafeln. Ein derartiges Verfahren ist aus der US 2,032,008 A bekannt.

Das rasche Abkühlen der Glastafeln erfolgt in der Regel durch Beblasen dieser mit Luft, wozu leistungsstarke und große Gebläse erforderlich sind, um den gewünschten raschen Temperatursprung zu bewirken.

Problematisch ist es, dass das Beblasen zu härtender Glastafeln mit Luft zu erheblichen Verwirbelungen führt und die nach dem Auftreffen auf die Glastafel erwärmte Luft nicht rasch genug abgeführt wird, so dass insgesamt sehr hohe Leistungen der Gebläse, mit welchen die Luft zum Beblasen der Glastafeln gefördert wird, erforderlich sind, um das für das Härten erforderliche rasche Abschrecken der Glastafeln zu erreichen.

Es ist bereits versucht worden, der Problematik mit den Verwirbelungen der auf die Glastafel gerichteten Luftströme Rechnung zu tragen. So schlägt die DE 31 49 429 A bei einem kontinuierlichen Verfahren zum Abschrecken von erhitzten Glastafeln vor, die Glastafel auf jede Seite einem strömenden Kühlmedium auszusetzen, wobei das Kühlmedium als sich über die gesamte Breite der Glastafel erstreckender Strom zugeführt wird. Die DE 31 49 429 A schlägt weiters vor, das Kühlmedium unter Umlenken des Stromes des Kühlmedium von der Glastafeloberfläche durch Absaugen zu entfernen. Dabei soll das Kühlmedium an einer Stelle auf die Oberfläche der Glastafel gerichtet und in einer dieser Stelle benachbarten Stelle von der Glastafel wieder abgesaugt werden.

Insbesondere das Härten dünner Glastafeln ist bislang nicht befriedigend möglich, wenn es mit vertretbarem Aufwand ausgeführt werden soll.

Der Erfindung liegt die Aufgabe zu Grunde, ausgehend von dem aus der DE 31 49 429 A bekannten Verfahren ein Verfahren und eine Vorrichtung zum Härten von Glastafeln anzugeben, welche die genannten Nachteile nicht aufweisen, insbesondere mit geringeren Gebläseleistungen auskommen und auch das Härten dünner Glastafeln zulassen.

Diese Aufgabe wird erfindungsgemäß mit einem Verfahren gelöst, das die Merkmale des Verfahrenshauptanspruches aufweist.

Insoweit eine Vorrichtung zum Härten von Glastafeln betroffen ist, wird die der Erfindung zu Grunde liegende Aufgabe mit einer Vorrichtung mit den Merkmalen des Vorrichtungshauptanspruches gelöst.

Bevorzugte und vorteilhafte Ausgestaltungen des erfindungsgemäßen Verfahrens und der erfindungsgemäßen Vorrichtung sind Gegenstand der Unteransprüche.

Da bei dem erfindungsgemäßen Verfahren dem Strom des Kühlmediums, der auf die Glastafel gerichtet wird, eine Flüssigkeit, beispielsweise in Form feiner Tröpfchen, zugesetzt wird, wird auch die Verdampfungswärme der Flüssigkeit ausgenützt, um das rasche Abkühlen der Außenschichten der Glastafel beim Härtevorgang zu erreichen. In der Regel wird die dem Strom des Kühlmediums (z.B. ein Luftstrom) zugesetzte Flüssigkeit Wasser sein, da Wasser eine relativ hohe Verdampfungswärme hat.

Da bei der erfindungsgemäßen Vorrichtung die Düsenöffnungen, aus welchen das auf die Glastafel gerichtete Kühlmedium austritt, rings um eine Öffnung, durch welche das Kühlmedium, nachdem es die Fläche der Glastafel bestrichen hat, wieder abgesaugt wird, angeordnet sind, ergibt sich eine im wesentlichen laminare Strömung, die ein besonders wirksames Abschrecken der Glastafel und ein effektives Härten derselben erlaubt.

Das Zusetzen der Flüssigkeitströpfchen zu dem Strom des Kühlmedium kann in einfacher Weise dadurch erfolgen, dass im Gebläse oder in der Leitung für die Luft, die auf die Glastafel zu richten ist, ein Zerstäuber für die Flüssigkeit (Wasser) vorgesehen ist, um die gewünschte feine Verteilung der Flüssigkeit in dem Strom des Kühlmedium zu erreichen.

Die erfindungsgemäße Vorrichtung ist insoferne vorteilhaft, als sie durch die Ausbildung der Düsen, durch welche Luft auf die Glastafeln tritt, in Kombination mit den Öffnungen, aus denen Luft abgesaugt wird, eine gerichtete Strömung des Kühlmedium ohne störende Verwirbelungen erreicht, sodass die Wärme von den Außenschichten der Glastafel rasch abgeführt werden kann.

Besonders vorteilhaft ist es, wenn bei der Erfindung, und zwar sowohl was das Verfahren als auch was die Vorrichtung anlangt, der kühlende Strom des Kühlmedium (z.B. Luft), das ggf. mit feinen Flüssigkeitströpfchen (Wassertröpfchen) versetzt ist, von beiden Seiten her auf die Glastafel gerichtet wird, da dann gleichzeitig eine Führung der horizontal oder vertikal ausgerichteten Glastafel nach der Art von Luftkissen ohne sonst auf die Glastafel einwirkende Stützelemente, wie Rollen, Walzen und dgl., möglich ist.

Weitere Einzelheiten und Merkmale der Erfindung ergeben sich aus der nachstehenden Beschreibung eines bevorzugten Ausführungsbeispieles an Hand der Zeichnungen. Es zeigt:
Fig. 1 schematisch im Schnitt eine Vorrichtung zum Abschrecken von Glastafeln,
Fig. 2 schematisch eine Düsenanordnung und
Fig. 3 in vergrößertem Maßstab eine Einzelheit aus Fig. 1.

Die beispielhaft gezeigte Vorrichtung zum Abschrecken von Glastafeln besitzt zwei Platten 2 und 4, zwischen denen ein Raum 6 für die Aufnahme der abzuschreckenden Glastafel 8 vorgesehen ist. Wenigstens eine der beiden Platten 2 und 4 ist relativ zur anderen Platte quer zu ihrer Flächenerstreckung (Pfeil 10) verstellbar, um den Raum 6 zwischen den Platten 2 und 4 (zwischen den einander zugekehrten Großflächen der Platten 2 und 4) auf die Dicke der abzuschreckenden Glastafel 8 anpassen zu können. Die Platten 2 und 4 können horizontal, zur Lotrechten geneigt oder lotrecht ausgerichtet sein.

In den einander zugekehrten Wänden 12 der als Hohlkammern ausgebildeten Platten 2 und 4 sind über deren Flächen (gleichmäßig) verteilt Löcher 14 für den Austritt des Kühlmediums (z.B. kühlende Luft) und Löcher 16 für das Absaugen von Kühlmedium aus dem Raum 6 zwischen den Platten 2 und 4 vorgesehen.

Im Ausführungsbeispiel ist der Innenraum jeder Platte 2 und 4 durch eine parallel zu deren Großflächen ausgerichtete Wand 18 in zwei Kammern 20 und 22 unterteilt. Die eine Kammer 20 wird über wenigstens eine Leitung 24 von einem Druckgebläse 26 mit Kühlmedium, z.B. Druckluft, beaufschlagt. Das Kühlmedium tritt dann als Strom, z.B. kühlender Luftstrom, aus den als Düsen wirkenden Löchern 14 in den Raum 6 zwischen den Platten 2 und 4 und trifft von beiden Seiten her auf eine dort angeordnete Glastafel 8.

An die andere Kammer 22 jeder Platte 2 und 4 ist über eine Leitung 28 ein Sauggebläse 30 angeschlossen, so dass über das die erste Kammer 20 durchsetzende Rohrstücke 32 zugeführte Kühlmedium (Luft) aus dem Raum 6 zwischen den Platten 2 und 4 abgezogen wird.

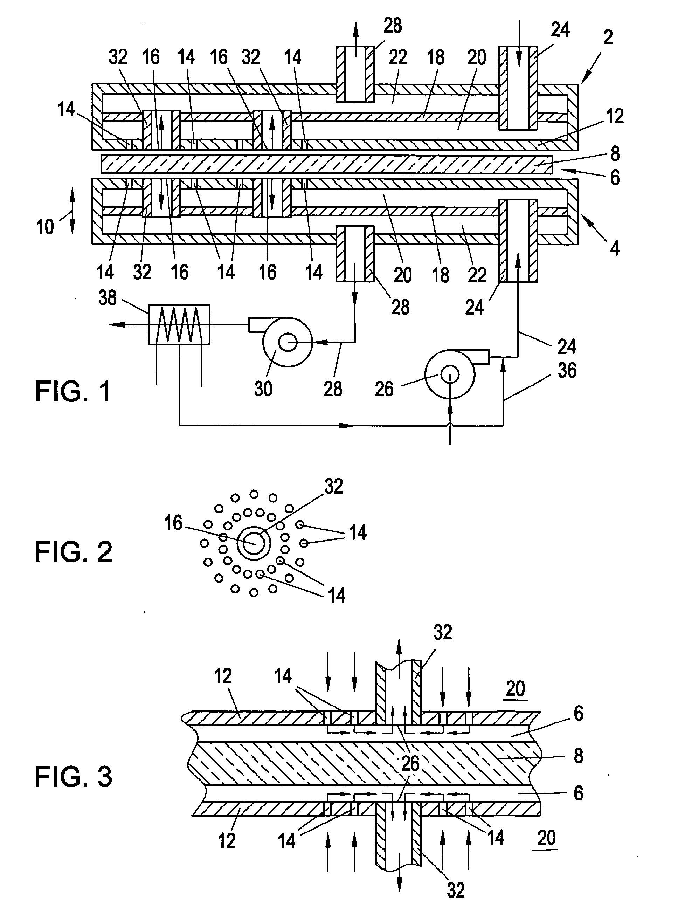

Im Einzelnen sind die Löcher 14 für den Austritt von Kühlmedium (Druckluft) und die Mündungen 16 der Rohrstücke 32, die zu der mit Unterdruck beaufschlagten Kammer 22 in den Platten 2 und 4 führen, so angeordnet, wie dies in Fig. 2 gezeigt ist. Durch diese Anordnung, bei der die Löcher 14 für den Austritt von Kühlmedium (Luft) jeweils rings um die Mündungen 16 der Rohrstücke 32, durch die Kühlmedium (Luft) abgesaugt wird, angeordnet sind, ergibt sich eine besonders günstige Verteilung des Kühlmedium (kühlender Luftstrom), so dass der gewünschte Temperatursprung unter die kritische Temperatur der zu härtenden Glastafel 8 rasch erreicht wird, auch wenn keine großen Gebläseleistungen angewendet werden.

Dabei ist daran gedacht, die Öffnungen 14 (Luftdüsen), aus denen Kühlmedium austritt, mit 1 bis 5 mm im Durchmesser zu gestalten. Der Kreis entlang welchem die Öffnungen 14 konzentrisch zur Mündung 16 angeordnet sind, hat beispielsweise einen Durchmesser von 4 cm.

In jeder der Platten 2 und 4 sind in deren dem Raum 6 benachbarten Wänden 12 eine Vielzahl von solchen Düsenanordnungen bestehend aus den Löchern 14 und den Mündungen 16 der Rohrstücke 32 vorgesehen. Die Platten 2 und 4 sind so groß ausgebildet, dass die gesamte abzuschreckende Glastafel 8 in dem Raum 6 zwischen ihnen aufgenommen ist, also nirgends übersteht. Für größere Anlagen können mehrere Teilplatten zu Platten 2 und 4 mit entsprechender Größe zusammengefügt werden.

Durch das Absaugen von Kühlmedium (Luft) durch die Rohrstutzen 32 über die mit Unterdruck beaufschlagte Kammer 22 in den Platten 2 und 4 ergibt sich beidseits der abzuschreckenden Glastafel 8 eine im wesentlichen laminare Strömung des Kühlmedium (Fig. 3), was ein besonders wirksames Abschrecken bewirkt.

Die Löcher 14 können in wenigstens einem zur Achse der Rohrstücke 32 bzw. deren Mündungen 16 konzentrischen Kreis rings um die Mündung 16 der Rohrstücke 32 angeordnet sein. Es ist aber auch eine Ausführungsform in Betracht gezogen, bei der, wie in den Fig. 2 und 3 angedeutet, die Löcher 14 in zwei zu den Rohrstücken 32 bzw. deren Mündungen 16 konzentrischen Kreisen angeordnet sind. In diesem Fall ist, wie Fig. 2 zeigt, die Anordnung der Löcher 14 bevorzugt so getroffen, dass Löcher 14 in den Kreisen zueinander versetzt angeordnet sind.

Die Anordnung von Löchern 14 rings um die mit Unterdruck beaufschlagten Mündungen 16 der Rohrstücke 32 muss nicht unbedingt kreisförmig sein. Andere Anordnungen von solchen Öffnungen um die Mündungen 16 der Rohrstücke 32 herum sind ebenfalls in Betracht gezogen.

Von Bedeutung ist es bloß, dass die Anordnungen aus Mündungen 16 der Rohrstücke 32 und Löchern 14 über die Gesamtfläche der dem Raum 6 zugekehrten Wände 12 der Kammern 2 und 4, also über deren wirksame Flächen, insbesondere gleichmäßig, verteilt sind, um ein gleichmäßiges Abschrecken einer Glastafel 8 beim Härten derselben sicherzustellen.

Um die Kühlwirkung des durch die Löcher 14 aus den Platten 2 und 4 auf die Großflächen der Glastafel 8 treffenden Kühlmediums zu verstärken, kann dem Kühlmedium eine verdampfbare Flüssigkeit, beispielsweise Wasser, in Form feiner Tröpfchen zugesetzt werden. Dies kann beispielsweise dadurch erreicht werden, dass in den vom Gebläse 26 zur Kammer 20 in den Platten 2 und 4 führenden Leitungen 24 wenigstens eine Düse 36 für das Einsprühen von Flüssigkeit vorgesehen sind.

Das über die Kammern 22 in den Platten 2 und 4 abgesaugte Kühlmedium ist, wenn dem zugeführten Kühlmedium Flüssigkeitströpfchen (Wassertröpfchen) zugesetzt werden, mit (Wasser)-Dampf angereichert. Es kann daher vorgesehen sein, dass das abgesaugte Kühlmedium (Luft) durch einen Kondensator 38 geführt wird, um die Flüssigkeit (das Wasser) wieder zu gewinnen. Dies ist insbesondere von Bedeutung, wenn das dem Kühlmedium, z.B. der kühlenden Luft, in Form von feinsten Tröpfchen zugesetzte Wasser aufbereitet, insbesondere enthärtet worden ist, damit auf den abzuschreckenden Glastafeln keine Rückstände, wie Kalkspuren, entstehen. Bei Verwendung von wenigstens einem Kondensator in der Leitung 28 vor oder nach dem Sauggebläse 30 kann aufbereitetes, z.B. enthärtetes Wasser, gewonnen und der wenigstens einen Düse 36 für das Einsprühen von Wasser in die Leitung 24 zugeführt werden. Auf diese Weise wird erneutes Aufbereiten von Wasser vermieden und es genügt, einfach Verluste von Wasser auszugleichen, indem dies von Zeit zu Zeit ersetzt wird.

Zusammenfassend kann ein Ausführungsbeispiel der Erfindung wie folgt beschrieben werden:

Zum Abschrecken von Glastafeln 8 mit einem kühlenden Luftstrom wird der Luftstrom aus mehreren Düsen 14 von beiden Seiten her auf die abzuschreckende Glastafel 8 gerichtet. Diese Düsen 14 sind rings um Mündungen 16 von Rohrstücken 32 angeordnet, durch welche der auf das Glas 8 gerichtete Luftstrom von der Glastafel 8 wieder weg geleitet wird. Die Kühlwirkung beim Abschrecken von Glastafeln 8 kann erhöht werden, indem der auf die Glastafeln 8 gerichteten Luft Wasser in Form feinster Tröpfchen zugemischt wird.

## Patentansprüche

1. Verfahren zum Abschrecken von Glastafeln, bei dem auf die abzuschreckende Glastafel, vorzugsweise von beiden Seiten der Glastafel her, ein Strom von Kühlmedium gerichtet wird, **dadurch gekennzeichnet, dass** dem Kühlmedium eine verdampfbare Flüssigkeit zugesetzt wird.

2. Verfahren nach Anspruch 1, **dadurch gekennzeichnet, dass** die verdampfbare Flüssigkeit dem Kühlmedium in Form feiner Tröpfchen zugesetzt wird.

3. Verfahren nach Anspruch 1 oder 2, **dadurch gekennzeichnet, dass** das Kühlmedium Luft ist.

4. Verfahren nach einem der Ansprüche 1 bis 3, **dadurch gekennzeichnet, dass** die Flüssigkeit Wasser ist.

5. Verfahren nach einem der Ansprüche 1 bis 4, **dadurch gekennzeichnet, dass** das Kühlmedium aus mehreren Öffnungen (14) in zu beiden Seiten der Glastafel (8) angeordneten Platten (2, 4) auf die Glastafel (8) gerichtet wird und dass aus einem Bereich, der von den Öffnungen (14) umgeben ist, Kühlmedium über weitere Öffnungen (16) von der Glastafel (8) abgeleitet wird.

6. Verfahren nach Anspruch 5, **dadurch gekennzeichnet, dass** das Kühlmedium durch die weiteren Öffnungen (16) abgesaugt wird.

7. Verfahren nach einem der Ansprüche 1 bis 6, **dadurch gekennzeichnet, dass** abgezogenes Kühlmedium über einen Kondensator (38) geführt wird, um in ihm enthaltenen Dampf der verdampfbaren Flüssigkeit zu kondensieren.

8. Vorrichtung zum Abschrecken von Glastafeln mit zwei zu beiden Seiten einer Glastafel (8) angeordneten Platten (2 und 4), die zwischen sich einen Raum (6) für eine abzuschreckende Glastafel (8) definieren, **dadurch gekennzeichnet, dass** in den dem Raum (6) benachbarten Wänden (12) Öffnungen (14) für den Austritt von Kühlmedium angeordnet sind, und dass die Öffnungen (14) um weitere Öffnungen (16) zum Abziehen von Kühlmedium von der Glastafel (8) herum angeordnet sind.

9. Vorrichtung nach Anspruch 8, **dadurch gekennzeichnet, dass** mehrere Gruppen aus Öffnungen (14) und weitere Öffnungen (16) über die dem Raum (6) zwischen den Platten (2 und 4)zugekehrten Seiten der Platten (2 und 4) verteilt angeordnet sind.

10. Vorrichtung nach Anspruch 9, **dadurch gekennzeichnet, dass** die Anordnungen aus Öffnungen (16) und weitere Öffnungen (14) über die Platten (2 und 4) gleichmäßig verteilt angeordnet sind.

11. Vorrichtung nach einem der Ansprüche 8 bis 10, **dadurch gekennzeichnet, dass** die Öffnungen (14) auf wenigstens einem zu den weiteren Öffnungen (16) konzentrischen Kreis angeordnet sind.

12. Vorrichtung nach einem der Ansprüche 8 bis 11, **dadurch gekennzeichnet, dass** in der Leitung (24) zum Zuführen von Kühlmedium wenigstens eine Düse (36) zum Einsprühen einer verdampfbaren Flüssigkeit vorgesehen ist.

13. Vorrichtung nach einem der Ansprüche 8 bis 12, **dadurch gekennzeichnet, dass** in der Leitung (28), über die Kühlmedium aus den Kammern (2 und 4) abgezogen wird, wenigstens ein Kondensator (38) für das Wiedergewinnen verdampfter Flüssigkeit in flüssiger Form vorgesehen ist.

14. Vorrichtung nach einem der Ansprüche 8 bis 13, **dadurch gekennzeichnet, dass** die Platten (2 und 4) hohl ausgebildet sind, und dass die Öffnungen (14) für den Austritt von Kühlmedium und die weiteren Öffnungen (16) zum Abziehen von Kühlmedium in den dem Raum (6) zwischen den Platten (2 und 4) benachbarten Wänden (12) der Platten (2 und 4) vorgesehen sind.

15. Vorrichtung nach Anspruch 14, **dadurch gekennzeichnet, dass** die Platten (2 und 4) durch Zwischenwände (18) in zwei zur Flächenerstreckung der Platten (2 und 4) parallele Kammern (20 und 22) unterteilt sind, dass die dem Raum (6) zwischen den Platten (2 und 4) benachbarten Kammern (20) über eine Leitung (24) mit unter Druck stehendem Kühlmedium beaufschlagt werden, und dass die vom Raum (6) weiter entfernt liegenden Kammern (22) über eine Leitung (28) mit einem Sauggebläse (30) verbunden sind.

16. Vorrichtung nach Anspruch 15, **dadurch gekennzeichnet, dass** die Kammern (22) über Rohrstücke (32), welche die Kammer (20) durchsetzen, mit den Öffnungen (16) verbunden ist.

17. Vorrichtung nach einem der Ansprüche 8 bis 16, **dadurch gekennzeichnet, dass** die Platten (2 und 4) aus mehreren nebeneinander angeordneten Teilplatten bestehen.
